Europäisches Patentamt

European Patent Office

Office européen des brevets

(11) Publication number: 0 311 966
A2

(12) EUROPEAN PATENT APPLICATION

(21) Application number: 88116831.4

(22) Date of filing: 11.10.88

(51) Int. Cl.⁴: H04Q 7/04 , H04M 3/42

(30) Priority: 12.10.87 JP 254569/87

(43) Date of publication of application:
19.04.89 Bulletin 89/16

(84) Designated Contracting States:
DE GB NL SE

(71) Applicant: NEC CORPORATION
33-1, Shiba 5-chome, Minato-ku
Tokyo 108(JP)

(72) Inventor: Otsu, Toshio NEC Corporation
33-1, Shiba 5-chome Minato-ku
Tokyo(JP)

(74) Representative: Vossius & Partner
Siebertstrasse 4 P.O. Box 86 07 67
D-8000 München 86(DE)

(54) Subscriber-concentrated communication system.

(57) A subscriber-concentrated transmission system
(10) for interconnecting an exchange and a plurality
of subscriber terminals over a concentrated trans-
mission path. A central station (12) receives a call
originated while all the communication channels are
busy for a terminal for which the call is meant and,
then, stores for a moment a message which is sent
from a calling subscriber. When any of the commu-
nication channels become idle, the central station
(12) transmits the message being stored to a called
subscriber over the idle channel.

FIG. 1

## SUBSCRIBER-CONCENTRATED COMMUNICATION SYSTEM

The present invention relates to a subscriber-concentrated communication system which interconnects a local exchange and multiple subscriber terminals by a concentrated communication path. More particularly, the present invention is connected with a subscriber-concentrated communication system connected to a local exchange by non-concentrated subscriber lines for performing various functions such as the control over the connection of the concentrated transmission path.

Connection of telephone sets or similar terminal units distributed in rural areas which are remote from an exchange exchange either geographically or topographically may be connected to the exchange by an omnidirectional multiplex communication system, as wel known in the art. This communication system includes a central station at which individual subscriber lines extending from the exchange terminate, and local stations each being located in the vicinity of and connected to a respective one of terminals. The central station and the local stations are selectively connectable over a radio or similar concentrated transmission path. Every time a call is originated on any of the terminals, a particular communication channel is assigned on the transmission path for interconnecting that terminal and the exchange.

In a communication system of the type described, a call meant for any of the terminals in the rural areas is sent from the exchange to the central station in the form of a calling signal (ringing signal in the case where the terminal comprises a telephone set) over a subscriber line. Upon sensing the calling signal, the central station assigns an idle communication channel to the call so that the call may arrive at the terminal associated with the above-mentioned subscriber line over the communication channel. A drawback with such a system configuration is that the central station cannot assign any channel to a call which is originated for a certain terminal while no idle channel is available on the transmission path. In this condition, a calling subscriber is simply caused to wait with no calling signal being fed to the terminal being called until an idle channel becomes available or until the calling subscriber himself gives up a conversation with the terminal which it is calling, despite that the subscriber receives a busy tone and therefore recognizes that the terminal for which the call is meant is being called.

It is therefore an object of the present invention to provide a subscriber-concentrated communication system which eliminates an occurrence that a call arrived at a central station while all the communication channels are occupied is simply neglected.

It is another object of the present invention to provide a generally improved subscriber-concentrated communication system.

In accordance with the present invention, in a communication system comprising a central station connected to an exchange by subscriber lines, one or more local stations connectable to the central station over a concentrated transmission path, and at least one terminal unit connected to any of the local stations, the subscriber lines interconnecting the exchange and central station and the terminals being each associated with a respective one of the terminal units, first means is provided for receiving a call meant for any of the terminal units and originated when all communication channels on the transmission path between the central station and the local stations are busy for the terminal unit, and for storing data representative of the terminal unit called and a message which is sent from a terminal unit originated the call. Second means is also provided for calling the called terminal based on the called terminal data stored in the first means when any of the channels on the transmission path becomes idle and, then, transmitting the message also stored in the first means to the called terminal.

The above and other objects, features and advantage of the present invention will become more apparent from the following detailed description taken with the accompanying drawings in which:

Fig. 1 is a schematic block diagram showing a subscriber-concentrated communication system embodying the present invention; and

Fig. 2 is a chart showing a specific connection control procedure which the system of Fig. 1 may perform in response to a call originated while all the communication channels are busy.

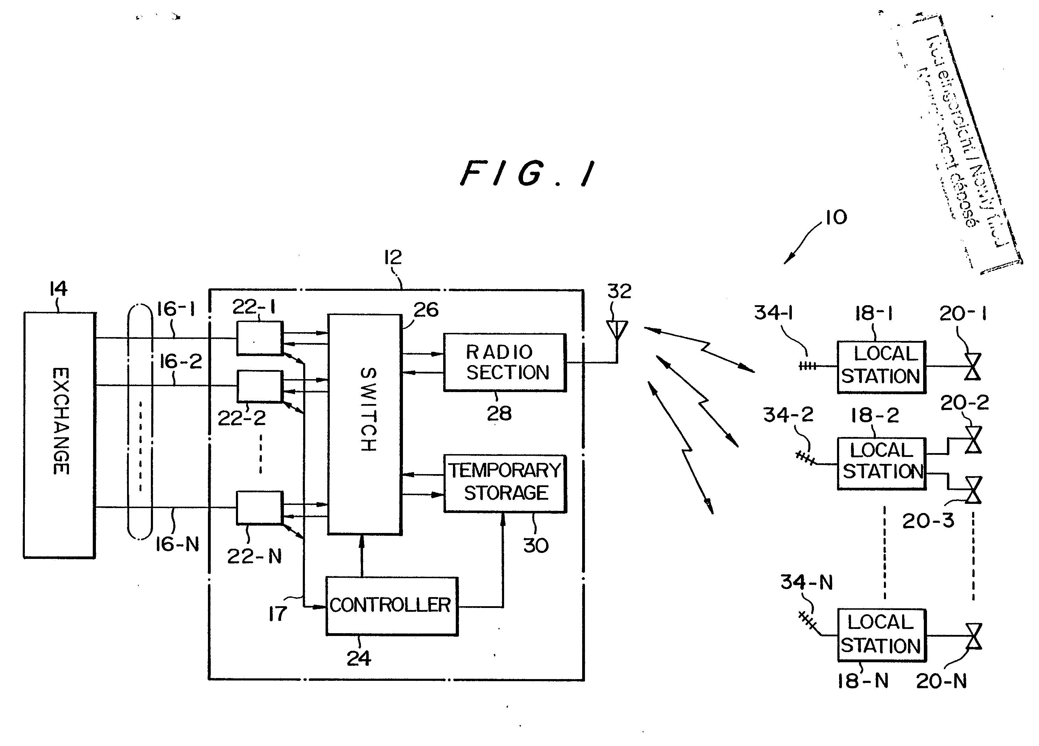

Referring to Fig. 1 of the drawings, a subscriber-concentrated communication system in accordance with the present invention is shown and generally designated by the reference numeral 10. The system 10 includes a central station 12 which is connected to a local exchange 14 by subscriber lines 16-1 to 16-N, and local stations 18-1 to 18-N connectable to the central station 12 by a radio communication path and connecting the exchange 14 to their associated terminals 20-1 to 20-N. In a general communication network, the terminals 20-1 to 20-N will be directly connected to that side of the subscriber lines 16-1 to 16-N which is adjacent to the central station 12.

The central station 12 includes subscriber line interface circuits 22-1 to 22-N each interfacing a respective one of the subscriber lines 16-1 to 16-N from the exchange 14 and inputting and outputting call origination data, call reception data, end-of-communication data and other call connection data over a data bus 17. A controller 24 controls the entire communication system with respect to the assignment of communication channels, for example. In response to a control signal from the controller 24, a concentrating switch 26 multiplexes and separates N signals (N being a positive integer) from the subscriber interface circuits 22-1 to 22-N into M communication channels (M being a positive integer smaller than N) on the transmission path. A radio section 28 interchanges signals with the local stations 18-1 to 18-N over the radio communication path. A temporary storage circuit 30 which is particular to the illustrative embodiment serves to store for a moment subscriber data associated with a call received and a message from a calling terminal when all the communication channels available on the transmission path are busy. The radio section 28 is connected to an antenna 32. The local stations 18-1 to 18-N are provided with antennas 34-1 to 34-N, respectively.

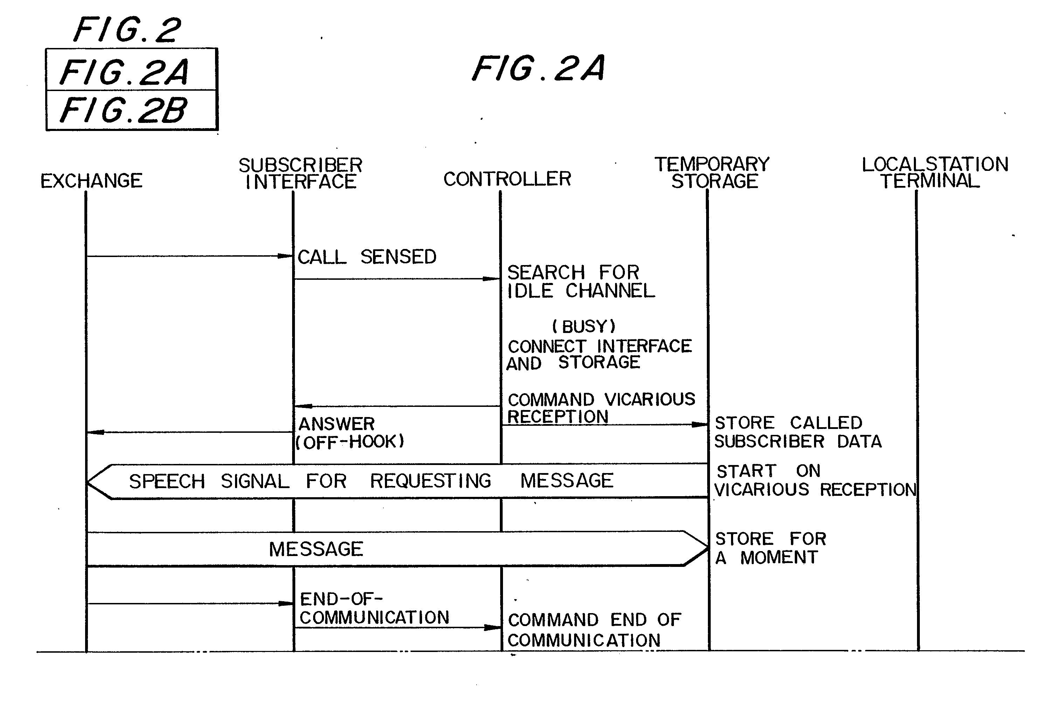

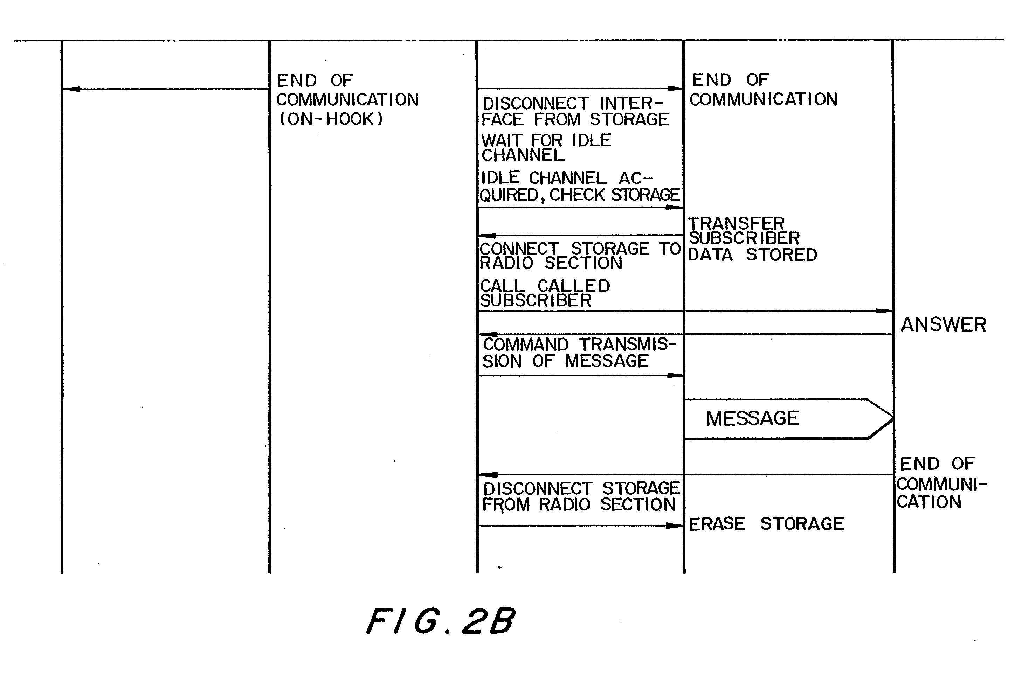

Fig. 2 shows a specific control procedure which the controller 24 performs in the event that a call is received while all the communication channels are busy. The operation of the system 10 will hereinafter be described on the basis of the procedure of Fig. 2.

Assume that a call from the exchange 14 is received by the central station 12 over the subscriber line 16-N when all the communication channels on the radio transmission path between the central station 12 and the local stations 18-1 to 18-N are busy. Then, the subscriber interface circuit 22-N associated with the subscriber line 16-N senses the incoming call and informs the controller 24 of the arrival of a call meant for the terminal 20-N over the data bus 17. In response, the controller 24 sees if any of the radio communication channels which it is supervising is idle. If no communication channel is idle, the controller 24 actuates the concentrating switch 26 to interconnect the subscriber interface circuit 22-N to the temporary storage circuit 30. In this condition, the controller 24 instructs the subscriber interface circuit 22-N to enter into a receiving state (on-hook state in the case of a telephone) via the data bus 17 while causing the temporary storage circuit 30 to send a signal which urges the calling subscriber to transmit a message. The resulting message sent from the calling subscriber and meant for the terminal 20-N is stored in the temporary storage circuit 80 together with called subscriber data. As soon as any radio channel becomes idle, the controller 24 checks the temporary storage circuit 30 to see if any message has been lodged therein. If a message has been lodged in the temporary storage circuit 30, the controller 24 calls over the idle channel the terminal which is designated by the called subscriber data also stored in the circuit 30 and then transmits the message to the called terminal.

In summary, it will be seen that the present invention provides a subscriber-concentrated communication system including a central station which receives a call originated while all the communication channels are busy for a terminal for which the call is meant and, then, stores for a moment a message which is sent from a calling subscriber. When any of the communication channels becomes idle, the central station transmits the message being stored to a called subscriber over the idle channel. In this manner, the system of the present invention prevents a call received by a central station from being neglected when no idle channel is available on the communication path.

Various modifications will become possible for those skilled in the art after receiving the teachings of the present disclosure without departing from the scope thereof.

## Claims

1. A communication system comprising a central station connected to an exchange by subscriber lines, one or more local stations connectable to said central station over a concentrated transmission path, and at least one terminal unit connected to any of said local stations, said subscriber lines interconnecting said exchange and said central station and said terminals being each associated with a respective one of said terminal units, said system comprising:
first means for receiving a call meant for any of said terminal units and originated when all communication channels on said transmission path between said central station and said local stations are busy for said terminal unit, and for storing data representative of said terminal unit called and a message which is sent from a terminal unit originated the call; and
second means for calling said called terminal based on the called terminal data stored in said first means when any of said channels on said transmission path becomes idle and, then, transmitting the message also stored in said first means to said called terminal.

2. A system as claimed in claim 1, wherein said first means and said second means are installed in said central station.

3. A system as claimed in claim 1 or 2, wherein said first means and said second means comprise:
subscriber interface means for interfacing said subscriber lines from said exchange and selectively inputting and outputting connection data inclusive of call origination data, call reception and end-of-communication data;

temporary storage means for storing for a moment the called terminal data and the message which is sent from the calling terminal;

concentrating switching means for multiplexing and separating N signals (N being a positive integer) from said subscriber interface means into M communication channels (M being an integer smaller than N) ; and

control means for controlling said subscriber interface means, said temporary storage means and said switching means such that, when no idle channel is available on said transmission path at the time of reception of a call, said switching means interconnects said subscriber interface means and said temporary storage means, said subscriber interface means enters into a receiving condition, said temporary storage means sends a signal for urging the calling terminal to transmit a message to the called terminal, and said temporary storage means stores for a moment a message which is transmitted from said calling station in response to said signal;

whereby when any of the channels on said communication path become idle, the called terminal is called on the basis of the called terminal data stored in said first memory and, then, the message stored for a moment is transmitted to said called terminal.

**FIG. 1**

10

LOCAL STATION 18-1   20-1   34-1

LOCAL STATION 18-2   20-2   34-2   20-3

LOCAL STATION 18-N   20-N   34-N

32

RADIO SECTION  28

TEMPORARY STORAGE  30

SWITCH  26

CONTROLLER  24

12

22-1   22-2   22-N

17

16-1   16-2   16-N

EXCHANGE  14

## FIG.2

| FIG.2A |
|---|
| FIG.2B |

## FIG.2A

EXCHANGE — SUBSCRIBER INTERFACE — CONTROLLER — TEMPORARY STORAGE — LOCALSTATION TERMINAL

CALL SENSED

SEARCH FOR IDLE CHANNEL

(BUSY) CONNECT INTERFACE AND STORAGE

COMMAND VICARIOUS RECEPTION

ANSWER (OFF-HOOK)

STORE CALLED SUBSCRIBER DATA

SPEECH SIGNAL FOR REQUESTING MESSAGE

START ON VICARIOUS RECEPTION

MESSAGE

STORE FOR A MOMENT

END-OF-COMMUNICATION

COMMAND END OF COMMUNICATION

EP 0 311 966 A2

FIG.2B

EP 0 311 966 A2